# EUROPÄISCHE PATENTSCHRIFT

(11) **EP 0 943 902 B1**
(45) Veröffentlichungstag und Bekanntmachung des Hinweises auf die Patenterteilung: **14.07.2004**
(21) Anmeldenummer: 98104932.3
(22) Anmeldetag: 18.03.1998
(51) Int. Cl.: G01F 23/284

(54) **Mikrowellen-Füllstandsmessgerät geeignet zum Betrieb bei hohen Temperaturen und/oder hohen Drücken und/oder chemisch aggressiver Umgebung**
Microwave level gauge capable of operation at high temperatures and/or high pressures and/or in a chemically agressive environment
Capteur du niveau à microondes capable de fonctionner à températures hautes et/ou pressions hautes et/ou dans un environnement chimiquement agressif

(43) Veröffentlichungstag der Anmeldung: 22.09.1999
(60) Teilanmeldung: 03025021.1
(73) Patentinhaber: VEGA Grieshaber KG, 77709 Wolfach (DE)
(72) Erfinder: Fehrenbach, Josef, D-77716 Haslachi.K. (DE); Motzer, Jürgen, D-77654 Offenburg (DE); Dietmeier, Jürgen, D-77756 Hausach (DE); Rapp, Günter, D-77709 Wolfach (DE)
(74) Vertreter: Maiwald, Walter, Dr. Dipl.-Chem.

(56) Entgegenhaltungen:
- EP-A- 0 444 834
- EP-A- 0 780 664
- WO-A-97/12211
- DE-A- 4 327 333
- DE-A- 4 405 855
- US-A- 4 495 807
- US-A- 5 279 156

## Beschreibung

### TECHNISCHES GEBIET

Die Erfindung liegt auf dem Gebiet der berührungslosen Messung von Materialfüllständen in Behältern unter Verwendung der Mikrowellenmeßtechnik und betrifft insbesondere ein für die Durchführung derartiger Messungen unter extremen Meßbedingungen wie hohen Temperaturen und zusätzerch möglicherweise auch noch hohen Drücken und/oder Vorliegen chemisch aggressiver Stoffe geeignetes Mikrowellen-Füllstandsmeßgerät.

Es gibt eine Vielzahl von unterschiedlichen Meßprinzipien, und darauf basierenden Meßgeräten, um den Füllstand von Füllgütern in Behältern zu messen. Liegen in dem Behälter jedoch extreme Meßbedingungen vor, wie etwa ungewöhnlich hohe Temperaturen, und/oder ungewöhnlich hohe Drücke oder auch chemisch aggressive Substanzen, so wurden bisher für derartige Füllstandsmessungen ausschließlich Kontaktmeßtechniken, nämlich kapazitive und hydrostatische Meßverfahren, sowie kombinierte Zu- und Abflußmessungen verwendet.

Bei Verwendung des kapazitiven Meßverfahrens bilden Füllgut und Behälter zusammen mit einer Meßsonde einen elektrischen Kondensator. Die Füllhöhe wird hierbei über eine Messung der Kondensatorkapazität erfaßt. Der Sensor ist meist nicht universell einsetzbar, sondern ausschließlich für eine spezielle Anwendung konzipiert. Bei elektrisch leitenden Füllgütern, sind je nach Füllgut, Druck und Temperatur spezielle Isolationswerkstoffe für die Meßsonde auszuwählen. Treten an der Meßsonde zusätzlich starke Füllgutanhaftungen auf, muß diese überdies mit anhaftungsneutralen Werkstoffen überzogen werden.

Das hydrostatische Meßverfahren hingegen mißt die Füllstandshöhe der Füllgüter über eine Bestimmung deren hydrostatischer Drücke. Es eignet sich jedoch nur für in ihrer Konsistenz fluide bis pastöse Materialien. Feste oder hoch-viskose Füllgüter sind dem hydrostatischen Meßverfahren prinzipiell nicht zugänglich.

Kombinierte Zu- und Abflußmessungen ermöglichen eine - meist nur grobe - Abschätzung der Füllstandstandshöhe fließfähiger Füllgüter aus der jeweils durch Differenz von zugeführter zu abgeführter Menge bestimmten, im Behälter befindlichen Füllgutmenge. Kapazitive Meßsonden, hydrostatische Druckmeßumformer und Durchflußmeßgeräte werden von der Anmelderin hergestellt und vertrieben.

Die gemäß dem Stand der Technik verwendeten Füllstandsmeßgeräte, weisen den Nachteil auf, daß stets ein materieller Kontakt der Messsonde mit dem zu messenden Material notwendig ist. Hieraus ergeben sich eine Reihe von nur schwierig zu bewältigenden technologischen Problemen, die schon bei Geräten für den Einsatz unter wenig beanspruchten Bedingungen eine relativ aufwendige und deshalb kostenspielige Produktherstellung zur Folge haben.

Im Hinblick auf diese Nachteile wäre es bei bestimmten Füllgütern oder Umgebungsbedingungen zweckmäßig, einen Füllstandsensor bereitstellen zu können, der auf einer berührungslosen, für praktisch alle Füllgüter tauglichen Messtechniken basiert und auch für den Betrieb zumindest bei hohen Temperaturen geeignet ist.

Aus der EP 0 444 834 A2 ist ein Füllstandmessgerät mit Antenne offenbart, das zum Einbau in einen Ofen vorgesehen ist. Zur Vermeidung einer zu starken Erhitzung der Antenne ist eine Wasserkühlung für die Antenne vorgesehen. Die Antenne selbst kann eine Horn- oder Parabolantenne sein. Als Alternative zur Wasserkühlung wird auch eine Luftkühlung für die Antenne vorgeschlagen.

In der US 5,279,156 A ist ein Füllstandmessgerät gezeigt, bei dem ein Hohlleiter zweigeteilt ist. Zwei in dem Hohlleiter angeordneted Wellenleiterfenster aus einem mikrowellendurchlässigen Material sind jeweils mit einem zylindrischen und einem konischen Abschnitt ausgebildet. Die zwei konischen Abschnitte der Wellenleiterfenster liegen aneinander an. Hierdurch soll weder bei hohen Drücken noch bei hohen Temperaturen oder Temperaturschwankungen der Wellenleiter in seiner Funktion beeinträchtigt sein.

Auch aus der DE 195 42 525 C2 ist ein Mikrowellenfenster bekannt, das zur räumlichen Trennung und mikrowellenmäßigen Verbindung eines räumlich äußeren Mikrowellenleiters von einem räumlich inneren Mikrowellenleiter mittels einer mikrowellendurchlässigen gläsernen oder keramischen Durchlassscheibe ausgebildet ist. Hierdurch soll ein druck- und temperaturfester Übergang der Mikrowellenstrahlung in den Behälter möglich sein. Das Mikrowellenfenster dient also dazu, die Mikrowellensendereinrichtung mit ihren empfindlichen elektronischen Bauteilen vor den Einflüssen der Verhältnisse im ein Medium speichernden Behälter zu schützen.

Eine sehr ähnliche Ausgestaltung mit mikrowellendurchlässigem Fenster ist aus der DE 43 27 333 A1 bekannt. Auch hier wird, wie bei der zuvor genannten Druckschrift, das Mikrowellensignal durch ein für Mikrowellen durchlässiges Fenster gesendet, das die Atmosphäre im Behälter von dem eigentlichen Füllstandmessgerät trennen soll.

### DARSTELLUNG DER ERFINDUNG

Das der Erfindung zugrunde liegende technische Problem besteht darin, ein Mikrowellen-Füllstandmessgerät zur Messung eines Füllstandes eines in einem Behälter befindlichen Materials bereitzustellen, das zumindest bei hohen Temperaturen einsetzbar ist und dabei konstruktiv einfach und kostengünstig ist.

Dieses technische Problem wird durch ein Mikrowellen-Füllstandmessgerät gelöst, das ein Gehäuse mit Elektronikeinsatz zur Gerätesteuerung und Messwertbestimmung aufweist. Des Weiteren ist eine mit dem Elektronikeinsatz in Verbindung stehende Sende- und Empfangseinheit zum Aussenden und Empfangen von Mikrowellensignalen vorhanden. Das erfindungsgemäße Füllstandsmessgerät weist zudem eine Einbaueinheit auf, mit der das Füllstandmessgerät in einer Öffnung in dem Behälter befestigbar ist. Zwischen dem Elektronikeinsatz und der Sende- und Empfangseinheit ist ein Distanzrohr zur thermischen und räumlichen Trennung des Elektronikeinsatzes von der Sende- und Empfangseinheit angeordnet. Das Distanzrohr wird von wenigstens einer Trennwand quer unterteilt. Die Trennwand besteht aus einem Material mit geringer Wärmeleitfähigkeit und unterteilt das Distanzrohr in zwei zwischen dem Elektronikeinsatz und der Einbaueinheit aufeinanderfolgende, voneinander thermisch isolierte Abschnitte.

Eine besonders vorteilhafte Weiterbildung der Erfindung sieht vor, daß der Betrieb des Füllstandsmeßgerätes hierbei auch bei Temperaturen oberhalb von 300 °C und bei Drücken oberhalb von 35 bar erfolgen kann.

Herkömmliche Füllstandsmeßgeräte, welche auf der Laufzeitmessung eines Mikrowellensignals basieren, sind zum Betrieb bei solchen extremen Bedingungen nicht geeignet. Der grundsätzliche Aufbau und die Funktionsweise eines solchen, im Stand der Technik bekannten Meßgerätes ist etwa folgender:

Die Steuerung des Sende-/Empfangsvorganges, sowie die Auswertung des Empfangssignals erfolgt in einer zentralen Steuer- und Meßeinheit, welche in praxi meist durch einen in einem Gehäuse aufgenommenen Elektronikeinsatz realisiert wird. Das Sende- sowie auch das Empfangssignal werden über eine den Elektronikeinsatz mit einer Sende-/Empfangseinheit verbindende elektrische Leitung, etwa ein Koaxialkabel, wechselseitig übertragen. Die Sende-/Empfangseinheit zum Aussenden und Empfangen des Mikrowellensignals umfaßt eine Hornantenne bestehend aus einer Antennenspeisung und Horn. Die Antennenspeisung ihrerseits besteht aus einem gefüllten Hohlleiter mit Einkopplung des Mikrowellensignals über einen Erregerstift. Der Übergang vom gefüllten Hohlleiter zum Horn wird durch einen linearen Taper elektrisch angepaßt. Das von der Füllgutoberfläche reflektierte Mikrowellensignal wird anschließend von der Antenne empfangen und über die elektrische Leitung an die zentrale Steuer- und Meßeinheit zur Bestimmung der Füllguthöhe geleitet. Die Gerätemontage am Behälter erfolgt über eine mit dem Gerätegehäuse verbundene Einbaueinheit, meist ein stabil mit dem Behälter verbindbarer Montageflansch. Gewöhnlicherweise im Behälter freiliegend und damit den Behälterbedingungen ausgesetzt ist der Teil der Einbaueinheit, welcher meist Horn, Taper und Hohlleiter umfaßt. In herkömmlicher Bauweise, welche zum Beispiel eine Abdichtung der Hohlleiterfüllung zum Hohlleiter mittels einer Elastomer-Dichtung vorsieht, besteht keine Druckfestigkeit und Druckdichtigkeit gegenüber hohen Behälterdrücken. Zudem ist das Meßgerät, insbesonders die empfindliche Meß- und Steuerelektronik, über die Einbaueinheit praktisch gänzlich den hohen Behältertemperaturen ausgesetzt. Ohne besondere Vorkehrungen zum Schutze gegen schädigende Einflüsse sind bekannte Mikrowellen-Füllstandsmeßgeräte unter extremen Behälterbedingungen deshalb nicht einsetzbar.

Um ein herkömmliches Mikrowellen-Füllstandsmeßgerät auch zumindest unter extremen Temperaturbedingungen zu betreiben, sind erfindungsgemäß spezielle Vorrichtungen und bauliche Abwandlungen vorgesehen, welche eine Isolierung der empfindlichen Geräteteile gegenüber den potentiell zerstörerischen Behälterbedingungen bewirken. Diese Vorrichtungen bewirken eine Abschirmung der hohen Behältertemperatur und je nach Ausführungsform auch eine Abschirmung chemisch aggressiver Stoffe und/oder eine Druckdichtigkeit und Druckfestigkeit. Insbesonders wird hierbei die empfindliche Meß- und Steuerelektronik sowie die Sende- und Empfangseinheit vor schädigenden Einflüssen bewahrt.

Die beispielhaften weiteren Ausführungsformen der vorliegenden Erfindung vor anderen Vorrichtungen zur Schaffung von Druckdichtigkeit und -festigkeit ermöglichen es, daß der Behälterdruck am Taper angreift und von der Hohlleiterfüllung aufgenommen wird. Die Hohlleiterfüllung ist druckstabil mit dem Hohlleiter verbunden. Der Hohlleiter wird dann fest mit der Einbaueinheit, insbesondere dem Montageflansch verbunden, vorzugsweise verschweißt, so daß die am Taper angreifende Druckkraft über den Hohlleiter auf den Montageflansch übertragen wird.

Die Vorrichtungen zur Druckdichtigkeit und Druckfestigkeit bewirken überdies eine Abschirmung gegenüber chemisch aggressiven Stoffen.

Wesentliche Leistungsverluste, etwaig einhergehend mit Störungen der Mikrowellenübertragung, wie etwa unerwünschten Reflexionen durch starke Impedanzänderungen ("Klingeln") und dergleichen, treten durch die erfindungsgemäßen Vorrichtungen nicht auf.

Zur thermischen Abschirmung der hohen Behältertemperaturen ist bei einem erfindungsgemäßen Füllstandsmessgerät die Gehäuseverbindung zwischen Elektronikeinsatz und Montageflansch zu einem beide Geräteteile trennenden Distanzrohr verlängert. Durch das Temperaturgefälle entlang des Distanzrohres und die räumliche Trennung wird eine thermische Abschirmung der damit verbundenen Geräteteile erzielt. Für das Material des Distanzrohres ist bevorzugt ein Metall, besonders bevorzugt Edelstahl, vorgesehen. Als Vorrichtung zur thermischen Abschirmung ist wenigstens eine, das Distanzrohr in voneinander thermisch isolierte Abschnitte quer unterteilende Trennwand im Distanzrohr angeordnet. Als Material für die Trennwand ist ein Material mit geringer Wärmeleitfähigkeit, vorzugsweise Teflon, vorgesehen. Dieses Bauelement sorgt für eine weitere Vergrößerung des Temperaturgefälles zwischen den beiderseitig des Distanzrohres befindlichen Geräteteilen. Hierbei wird nicht nur die unmittelbare Wärmeleitung entlang der Wandung des Distanzrohres, sondern überdies auch die Wärmeübertragung im Inneren des Distanzrohrs (durch Konvektion, Strahlung und dgl.) unterbunden. Somit wird es ermöglicht, daß auch innerhalb des Distanzrohres hitzeempfindliche Geräteteile in den thermisch isolierten, kälteren Abschnitten angeordnet werden können.

Eine weitere erfindungsgemäße Ausgestaltung sieht zur thermischen Abschirmung hitzeempfindlicher Teile als Teil der elektrischen Leitung zwischen Elektronikeinsatz und Hohlleiter eine Luftkoaxialleitung vor. Die Luftkoaxialleitung ermöglicht eine breitbandige Übertragung des Sende-/Empfangssignals unter extremen thermischen Bedingungen. Außenleiter und Innenleiter der Luftkoaxialleitung werden vorzugsweise aus Metall hergestellt. Im Gegensatz hierzu sind gewöhnliche Hochfrequenzkabel bei hohen Temperaturen (oberhalb 300 °C) hierfür nicht einsetzbar. Vorzugsweise wird die Luftkoaxialleitung so angeordnet, daß die Mikrowellenimpulse hieraus über den Erregerstift direkt in das Einkoppelstück des Hohlleiters einkoppeln. Besonders bevorzugt wird hierbei, daß sich die thermisch isolierende Trennwand innerhalb des Distanzrohres in der Nähe der Verbindung der vom Elektronikeinsatz kommenden elektrischen Leitung mit der zum Taper führenden Luftkoaxialleitung befindet; hierdurch wird vorteilhaft innerhalb des Distanzrohres eine Wärmescheide etwa auf Höhe des Überganges in die Luftkoaxialleitung gestaltet.

Erfindungsgemäß ist zur Verbindung der Hohlleiterfüllung am Hohlleiter wenigstens ein Teil der Hohlleiterfüllung aus einem für Mikrowellen durchlässigen, hitzebeständigen Material, vorzugsweise Glas, ausgebildet. Durch diese Maßnahme kann unter Anwendung herkömmlicher Schmelz-, Schweiß- und Lötverfahren eine auch bei hohen Drücken druckbeständige Verschmelzung, Verschweißung oder Verlötung des Glases mit der umgebenden metallischen Hülse ohne vorherige Metallisierung der Hohlleiterfüllung erreicht werden. Diese Maßnahme kann, muß aber nicht, zusammen mit einzelnen oder allen der anderen oben genannten erfindungsgemäßen Einrichtungen vorgesehen werden.

Neben den Vorrichtungen zur thermischen Isolierung hitzeempfindlicher Geräteteile sind weiters bei beispielhaften Ausführungsformen der Erfindung druckstabile Vorrichtungen vorgesehen, welche eine hochgradige Druckdichtigkeit und eine Dichtigkeit gegenüber chemisch aggressiven Stoffen bewirken. Diese Vorrichtungen umfassen grundsätzlich alle geeigneten Dichtmittel, welche so angeordnet werden können, daß eine axiale und/oder radiale Dichtung resultiert. Insbesondere sind hierfür Metalldichtungen, Graphitdichtungen und dergleichen geeignet. Die Dichtwirkung wird hierbei vorzugsweise durch den Preßdruck einer auf das Dichtmittel einwirkenden Druckschraube erzielt. Zusätzlich können zwischen Druckschraube und Dichtmittel weitere Elemente vorhanden sein, welche etwa ein Verdrehen des Dichtmittels bei Anziehen der Druckschraube vermeiden. Für die druckstabile Abdichtung der Verbindungsstellen benachbarter Geräteteile, etwa zwischen Hohlleiter und Montageflansch, oder Distanzrohr und Montageflansch sind hingegen gewöhnliche Verschweißungen vorgesehen. Vorzugsweise reicht die Schweißnaht hierbei etwa 1 mm tief in den Verbindungsspalt hinein.

Im folgenden werden fünf gleichermaßen bevorzugte Ausführungsformen der Erfindung dargestellt, welche die obig dargestellten Vorrichtungen zur termischen Abschirmung der hohen Behältertemperaturen sowie die Dichtmittel zur Abdichtung des Behälterdruckes und chemisch aggressiver Stoffe mit illustrieren. Die ersten drei bevorzugten Ausführungsformen unterscheiden sich durch unterschiedliche Vorrichtungen zur Befestigung der Hohlleiterfüllung im Hohlleiter. Die nächst dargestellte bevorzugte Ausführungsform ist dadurch gekennzeichnet, daß das Distanzrohr ein Hohlleiter ist. Die als fünfte dargestellte, ebenso bevorzugte Ausführungsform schließlich ist durch eine Stielantenne anstelle einer Hornantenne charakterisiert. Einzelne Merkmale dieser Ausführungsformen lassen sich, wie aus der folgenden Beschreibung ersichtlich, zu weiteren hier nicht beschriebenen Ausführungsformen der Erfindung neu kombinieren.

Eine erste bevorzugte Ausführungsform sieht zur Druckaufnahme des Behälterdruckes am Taper eine druckstabile Verschweißung, Verlötung, Verschmelzung und dergleichen, der Hohlleiterfüllung mit dem Hohlleiter durch bekannte Techniken vor. Der Hohlleiter kann hierbei zusätzliche Verbindungselemente, wie Löt- oder Schweißhülsen enthalten, wobei diese selbst dann druckstabil am Hohlleiter angebracht sind. In einer vorteilhaften Ausführungsform kann diese Löt- oder Schweißhülse 2-teilig ausgeführt werden, wobei ein Teil aus einem dem Wäremeausdehnungskoeffizienten der Hohlleiterfüllung angepaßten Material hergestellt ist. Um eine Korrosion der Verbindungsnähte zu verhindern, wird vorzugsweise in axialer Richtung zwischen der Verbindungsnaht und dem Behälterinneren eine Dichtung zur Abschirmung chemisch aggressiver Stoffe angeordnet.

Eine weitere bevorzugte Ausführungsform sieht zur Druckaufnahme des Behälterdruckes am Taper eine druckstabile, thermische Verpressung der Hohlleiterfüllung mit dem Hohlleitermantel vor. Der Hohlleitermantel ist dabei so geformt, daß die Kontaktfläche mit dem Taper ausreichend groß ist, um eine druckstabile Verpressung zu gewährleisten. Die thermische Verpressung des Tapers mit dem Hohlleitermantel kann ohne zusätzliche an der Verpressung beteiligte Elemente vorgesehen werden. Zwischen den beiden zu verpressenden Teilen könnte sich vorzugsweise auch eine Schicht aus duktilem Material, vorzugweise Gold, befinden. Bei der thermischen Verpressung werden die Verpressungstemperaturen und die Materialien von Taper und Hohlleitermantel erfindungsgemäß so ausgewählt, daß die Verpressung auch bei sehr hohen Temperaturen, insbesondere bei Temperaturen oberhalb von 300 °C stabil bleibt. Ein besonders bevorzugtes Material für den Hohlleitermantel ist hierzu VA-Stahl.
Bei einer alternativen Ausgestaltung ermöglichen es zusätzliche, die Verpressung fixierende Elemente, die Verpressung ggf. auch bei vergleichsweise niedrigeren Temperaturen, insbesondere auch bei Raumtemperatur durchzuführen. Durch diese zusätzlichen Elemente bleibt die Verpressung dann auch bei extrem hohen Behältertemperaturen stabil, obwohl die Verpressung bei relativ niedrigeren Temperaturen erfolgt ist. Wesentliches Kennzeichen dieser zusätzlichen, die Verpressung fixierenden Elemente, ist, daß deren Material einen geringeren Wärmeausdehnungskoeffizienten hat als das Material des Hohlleitermantels. Somit wird aufgrund der geringeren Wärmeausdehnung des zusätzlichen Elementes die Verpressung vor allem bei Erwärmung der Preßstelle durch hohe Behältertemperaturen gesichert. Besonders bevorzugt ähnelt der Wärmeausdehnungskoeffizient des Materials des zusätzlichen Elementes demjenigen der Hohlleiterfüllung. Bei dieser Ausgestaltung sind zwei unterschiedliche, gleichermaßen bevorzugte Varianten vorgesehen, bei denen sich das zusätzliche fixierende Element entweder in der Preßstelle zwischen Hohlleiterfüllung und Hohlleitermantel befindet, oder aber den Hohlleitermantel an der Preßstelle umgibt. Befindet sich das zusätzliche fixierende Element zwischen der Hohlleiterfüllung und dem Hohlleitermantel, so wird als besonders bevorzugtes Material dafür eine Legierung wie Hastelloy vorgesehen. Umgibt das zusätzliche Element hingegen die Preßstelle, so ist als Material hierfür eine Legierung wie Vacon 70 besonders bevorzugt.

Eine andere bevorzugte erfindungsgemäße Ausführungsform sieht zur Aufnahme des Behälterdruckes am Taper eine Verdickung der Hohlleiterfüllung vor. Hierbei stützt sich die Verdickung der Hohlleiterfüllung in der axialen Druckrichtung der Hohlleiterfüllung gegen eine ausreichend stabile Auflage insbesondere in Form einer Druckschulter. Die Druckschulter kann dabei durch eine Druckschraube und ggf. einem weiteren Element, insbesondere einen zusätzlichen Druckring, gebildet werden. Durch die Verschraubung mit dem Einbauteil, vorzugsweise mit dem Hohlleitermantel, gewährleistet die Druckschraube eine ausreichend stabile Abstützung der Verdickung der Hohlleiterfüllung an der Druckschulter auch bei extrem hohen Behälterdrücken. Um nicht nur die Druckfestigkeit durch die Verdickung der Hohlleiterfüllung und die Druckschulter, sondern auch die Druckdichtigkeit gegenüber dem Behälterdruck sicherzustellen, sind zudem zwischen der Verdickung und dem Behälterinneren hierzu geeignete Dichtmittel vorgesehen. Besonders bevorzugt sind als Dichtmittel ein Graphitring, eine Graphitdichtung vom Typ "Spiraltherm" oder eine Metalldichtung vom Typ "Helicoflex". Druckwirkung auf das Dichtmittel wird hierbei vorzugsweise durch die Verdickung der Hohlleiterfüllung, ggf. unter Behelf eines Druckringes, übertragen. Weiterhin besonders bevorzugt ist eine Verdickung der Hohlleiterfüllung, welche in ihrer axialen Länge der halben Wellenlänge der geleiteten Mikrowellen entspricht. Durch die Ausbildung der Verdickung als Lambda/2-Transformationsschicht werden in vorteilhafter Weise Leistungsverluste der Mikrowellenleitung durch Reflexionen an der Verdickung vermieden. Dabei wird die Reflexion an der einen sprunghaften Impedanzänderung durch die Reflexion an der zweiten sprunghaften Impedanzänderung kompensiert.

Eine weitere erfindungsgemäße Ausführungsform sieht für das Distanzrohr nicht nur die Funktion vor, eine räumliche und thermische Trennung der damit verbundenen Geräteteile zu erreichen, sondern zusätzlich, daß es als Lufthohlleiter zur Übertragung der Mikrowellen dient. Innerhalb des als Hohlleiter fungierenden Distanzrohres ist dann vorzugsweise zur thermischen Abschirmung hitzeempfindlicher Geräteteile eine für Mikrowellen durchlässige Trennwand aus einem gering wärmeleitfähigen Material, vorzugsweise Teflon, angeordnet. Mit Ausnahme der Luftkoaxialleitung können bei dieser Ausführungsform alle vorgenannten Vorrichtungen zur thermischen Abschirmung hoher Behältertemperaturen, die Vorrichtungen zur Druckdichtigkeit und Druckfestigkeit gegenüber hohen Behältertemperaturen, sowie der Dichtigkeit gegenüber chemisch aggressiven Stoffen ebenfalls eingesetzt werden. Bei dieser Ausführungsform sind in vorteilhafter Weise keine Kabel- und Leitungsverbindungen im Distanzrohr zwecks Übertragung der Mikrowellenimpulse erforderlich.

Eine weitere erfindungsgemäße Ausführungsform sieht statt einer Hornantenne eine prinzipiell bekannte Stielantenne zur Aussendung der Mikrowellen in den Behälter vor. Die Vorrichtungen zur thermischen Abschirmung der hohen Behältertemperaturen, Druckdichtigkeit und Druckfestigkeit gegenüber hohen Behälterdrücken, sowie auch gegenüber chemisch aggressiven Substanzen zwischen dem Antennenstiel (der hier statt des Tapers vorgesehen ist) und dessen Halterung etc. sind analog den vorherigen Ausführungsformen ausgebildet. Diese Ausführungsform ist zur Materialfüllstandsbestimmung durch relativ kleine Behälteröffnungen geeignet.

Mit Ausnahme der Ausführungsform, in welcher das Distanzrohr als Lufthohlleiter fungiert, erfolgt bei allen Ausführungsformen die Einkopplung der Mikrowellen in die Hohlleiterfüllung entweder seitlich, d.h. entlang der axialen Länge der Hohlleiterfüllung, oder von hinten, d.h. an der dem Taper abgewandten Seite, vorzugsweise jedoch seitlich. Bei seitlicher Einkopplung wird die seitliche Stellung des Erregerstiftes in besonders bevorzugter Weise durch eine Abwinklung der Luftkoaxialleitung erzielt.

### Kurze Beschreibung der Zeichnungen

Fig. 1A ist ein schematisches Übersichtsdiagramm einer erfindungsgemäßen Ausführungsform des Füllstandsmeßgerätes.
Fig. 1B zeigt in einem vergrößerten Ausschnitt der Fig. 1A die Sende-/Empfangseinheit des Füllstandsmeßgerätes.
Fig. 2A, 2B, 2C zeigen drei Varianten einer alternativen erfindungsgemäßen Ausführungsform des Füllstandsmeßgerätes (Verpressung der Hohlleiterfüllung mit dem Hohlleitermantel).
Fig. 3A, 3B zeigen zwei Varianten einer alternativen erfindungsgemäßen Ausführungsform des Füllstandsmeßgerätes (Verdickung der Hohlleiterfüllung).
Fig. 4 zeigt eine erfindungsgemäße Variante der Ausführungsform der Fig. 1.
Fig. 5 zeigt eine Ausführungsform für die seitliche Einkopplung des Erregerstiftes in das Einkopplungsstück des Tapers.
Fig. 6 zeigt eine weitere erfindungsgemäße alternative Ausführungsform des Füllstandemeßgerätes, worin das Distanzrohr ein Mikrowellen-Hohlleiter ist.
Fig. 7 zeigt eine weitere erfindungsgemäße alternative Ausführungsform des Füllstandsmeßgerätes, worin die Hornantenne durch eine Stielantenne ersetzt ist.

### Detaillierte Beschreibung der speziellen Ausführungsbeispiele

### (Gleiche Geräteelemente erhalten in den Figuren jeweils analoge Bezugszeichen)

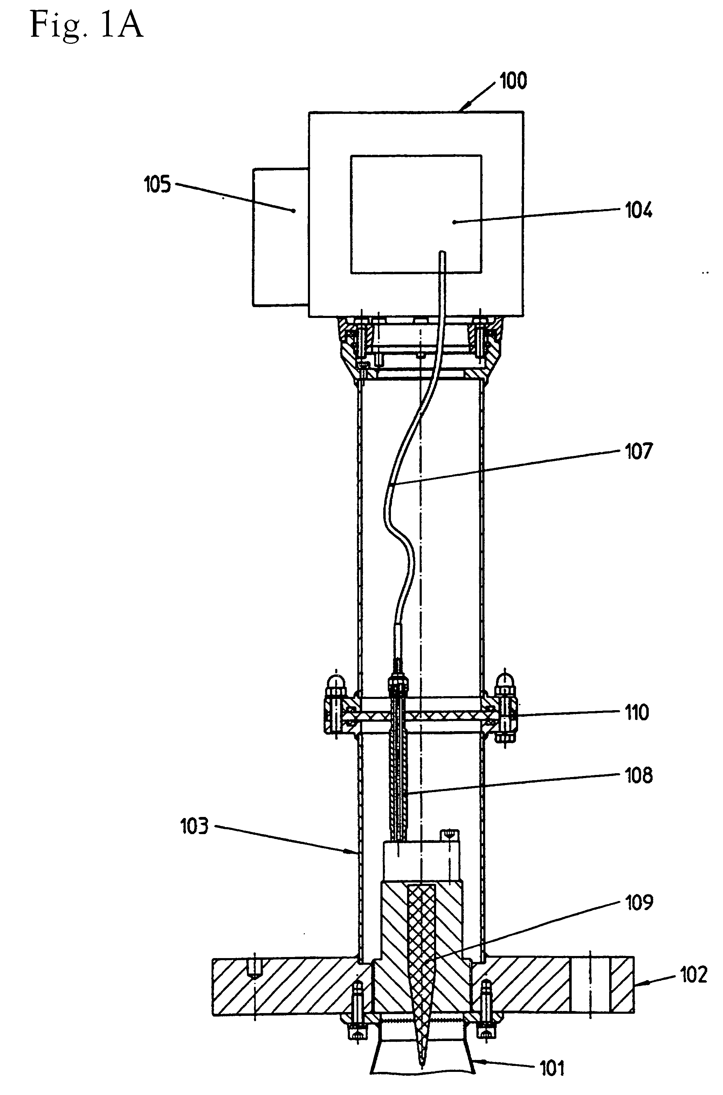

Fig. 1A ist eine schematische Übersichtsdarstellung eines erfindungsgemäßen Füllstandsmeßgerätes. Das Mikrowellen-Füllstandsmeßgerät setzt sich aus Steuer-/Meßeinheit 100, Sende-/Empfangseinheit 101, Einbaueinheit 102, und einem, die Steuer-/Meßeinheit mit der Sende-/Empfangseinheit verbindenden stählernen Distanzrohr 103 zusammen. Die Steuer-/Meßeinheit 100 umfaßt ein Gehäuse mit einem Elektronikeinsatz 104 und einen Klemmraum 105. Wesentliche Aufgabe der Steuer-/Meßeinheit 100 ist die Gerätesteuerung, insbesondere die Steuerung des Sende-/Earpfangsvorganges, sowie die anschließende Auswertung des empfangenen Mikrowellensignals.

Im Distanzrohr 103 befindet sich die elektrische Leitung, bestehend aus einem Kabel 107 und einer Luftkoaxialleitung 108, zur wechselseitigen Übermittlung der Mikrowellenimpulse zwischen Elektronikraum und Sende-/Empfangseinheit. Die Einkopplung der Mikrowellenimpulse erfolgt in eine Hohlleiterfüllung 109. Im Distanzrohr 103 ist zusätzlich eine Teflontrennwand 110, nahe der Verbindung des Kabels 107 mit der Luftkoaxialleitung 108 angeordnet. Hierdurch wird eine thermische Abschirmung der mit dem Distanzrohr verbundenen Geräteelemente, insbesondere auch der Geräteelemente innerhalb des Distanzrohres erreicht.

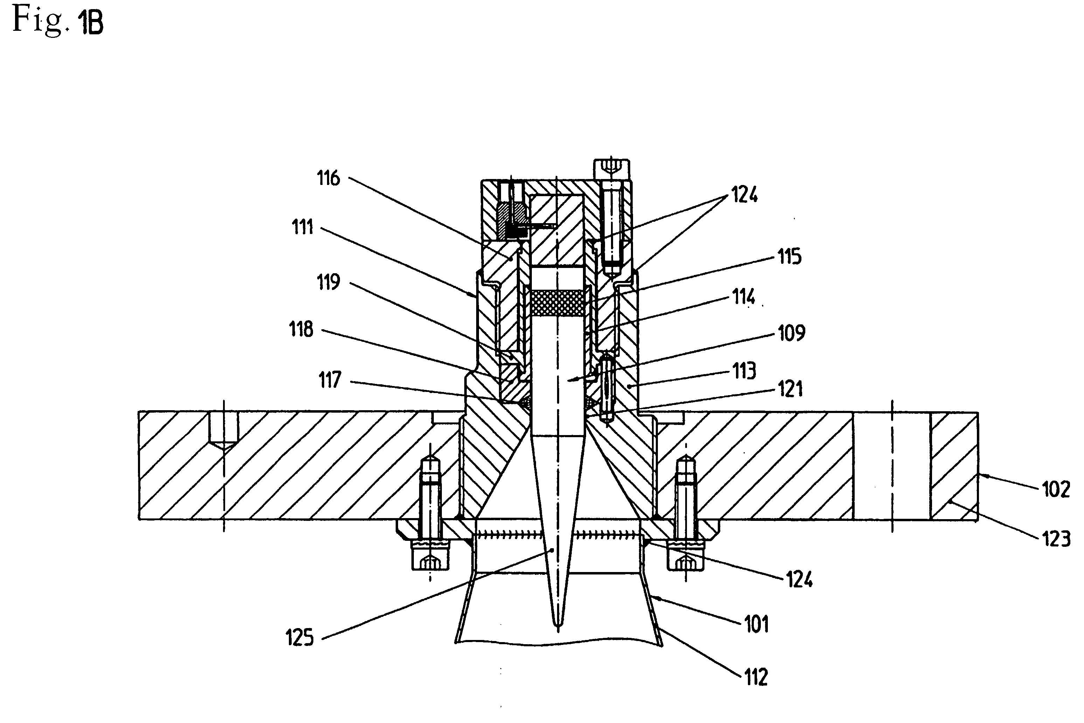

Fig. 1B zeigt in einem Auschnitt der Fig. 1A die Sende-/Empfangseinheit des erfindungsgemäßen Mikrowellen-Füllstandsmeßgerätes. In der Sende-/Empfangseinheit 101 sind die Hohlleiterfüllung 109, ein Taper 125, ein Hohlleiter 111 und ein Horn 112 angeordnet. Der Hohlleiter 111 setzt sich aus einem Hohlleitermantel 113, einer Löthülse 114, einer Lötnaht 115, einer Druckschraube 116, einer Metalldichtung 117, einem Druckring 118 und einer Scheibe 119 zusammen. Hohlleiterfüllung 109, Taper 125, Hohlleitermantel 113 und Horn 112 liegen zur Übermittlung der Mikrowellenimpulse gegenüber dem Behälterinneren frei.

Die Hohlleiterfüllung 109 ist in die Löthülse 114 eingelötet. Die Löthülse ihrerseits ist über den Hohlleitermantel 113 an der Einbaueinheit 102 fixiert. Die Metalldichtung 117 ist unter Verwendung des Druckringes 118 als kombinierte axial/radiale Dichtung ausgeformt. Die Dichtwirkung wird über die Druckschraube 116, welche über die Scheibe 119 und den Druckring 118 auf die Metalldichtung einwirkt, erzielt. Die Druckschraube erhält den für die Dichtwirkung notwendigen Gegendruck, durch Auflage der Metalldichtung auf einer Druckschulter 121 des Hohlleitermantels 113. Die Scheibe 119 verhindert ein Verdrehen der Metalldichtung bei Fixierung der Druckschraube. Durch die Metalldichtung wird eine Druckdichtigkeit von Hohlleiterfüllung und Hohlleiter gegenüber extrem hohen Behälterdrücken erzielt.

Die Lötnaht 115 ist so ausgeformt, daß der an der Hohlleiterfüllung angreifende Behälterdruck durch die Lötnaht aufgenommen, und über die fixierte Verbindung zwischen Löthülse und Hohlleitermantel auf die Einbaueinheit übertragen wird. Die Metalldichtung 117 verhindert überdies eine Korrosion der Lötnaht 115 durch ein Abschirmen von chemisch agressiven Stoffen aus dem Behälterinneren.

Als Materialien sind für die Hohlleiterfüllung 109 vorzugsweise keramisches Al₂O₃, und für den Hohlleiter 113 vorzugsweise Edelstahl vorgesehen.

Die Einbaueinheit 102 umfaßt einen Montageflansch 123, welcher am Behälter fixiert wird. Schweißnähte 124 zwischen Löthülse und Druckschraube, Druckschraube und Hohlleitermantel, Hohlleitermantel und Montageflansch, Montageflansch und Distanzrohr sorgen für mechanische Fixierung und Druckdichtigkeit gegenüber extrem hohen Behälterdrücken. Die Schweißnähte sind so geformt, daß sie genügend tief in den jeweiligen Verbindungsspalt hineinreichen.

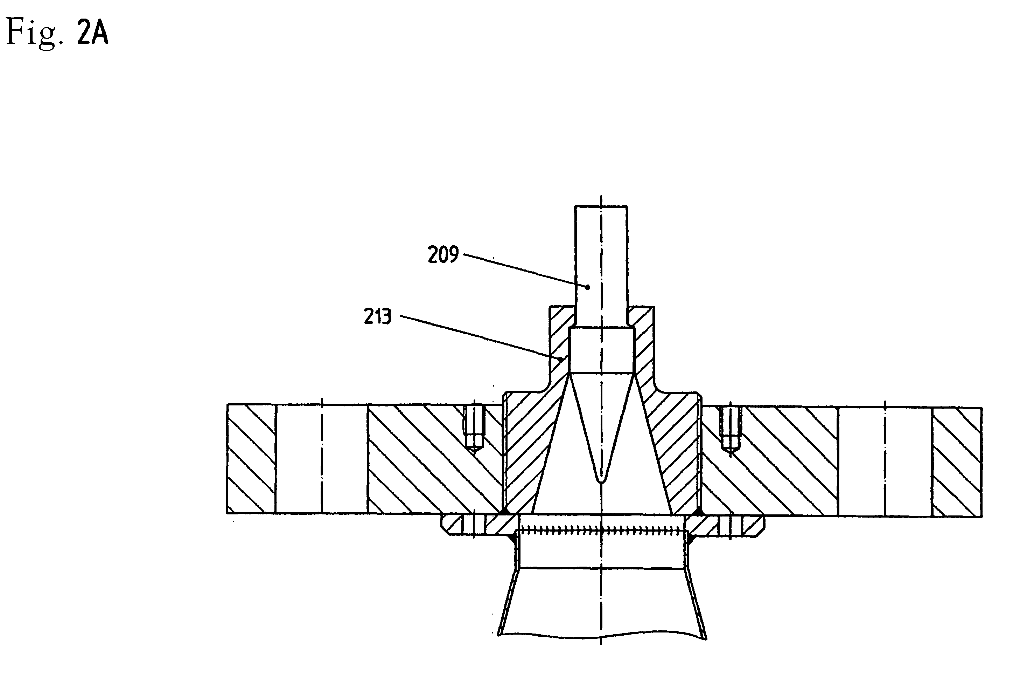

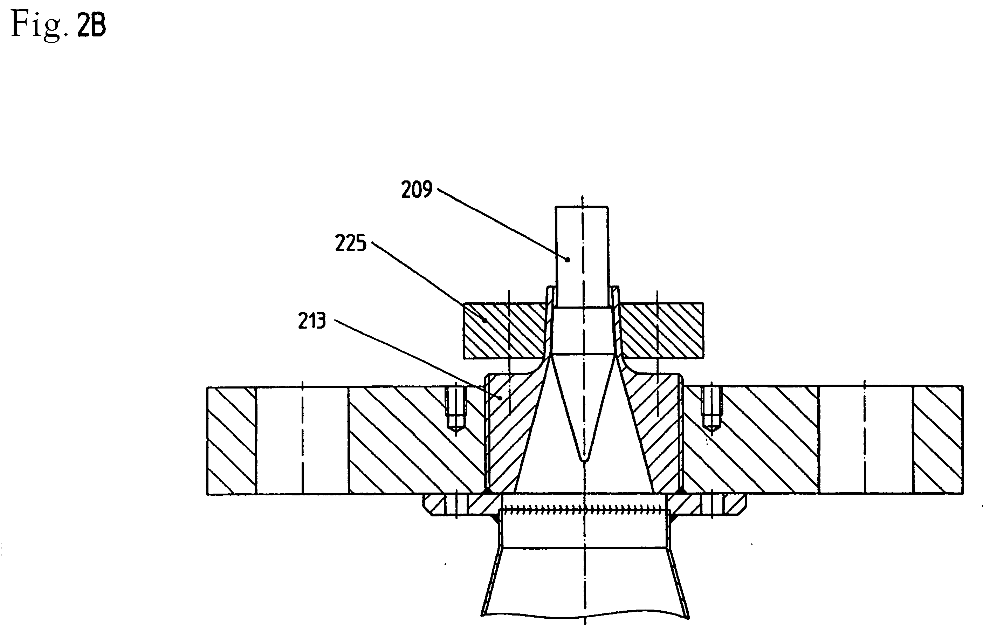

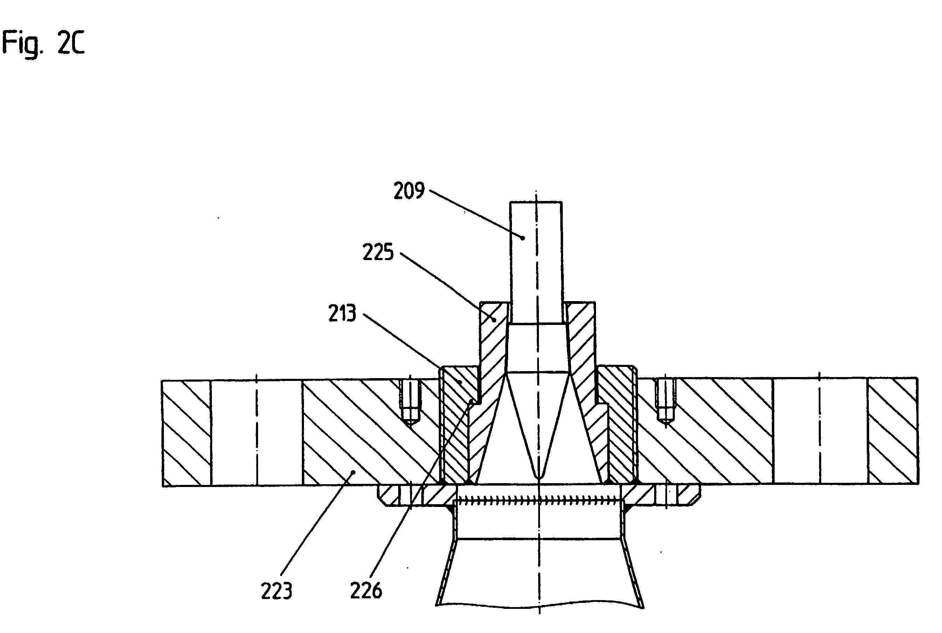

Fig. 2A, 2B und 2C zeigen drei alternative Varianten einer weiteren erfindungsgemäßen Ausführungsform des Füllstandsmeßgerätes, wobei die Hohlleiterfüllung mit dem Hohlleitermantel zur Aufnahme des Behälterdruckes am Taper verpreßt ist.

Fig. 2A zeigt die thermische Verpressung der Hohlleiterfüllung 209 mit dem Hohlleiter, welcher in dieser Ausführungsform nur aus dem Hohlleitermantel 213 besteht. Der Hohlleitermantel ist ringförmig an den Hohlleiter füllig anliegend geformt, so daß eine hinreichend große Verpreßfläche mit der Hohlleiterfüllung entsteht und eine hinsichtlich hoher Behälterdrücke ausreichend feste Verbindung gebildet wird. Die Materialien für Hohlleiterfüllung und Hohlleitermantel sind so gewählt, daß die Verpressung auch bei sehr hohen Behältertemperaturen den hohen Behältertemperaturen standhält.

Fig. 2B zeigt eine Variante zur Ausführungsform der Fig. 2A, worin die Verpreßstelle von einem zusätzlichen Element, hier einem Ring 225 aus einem thermisch dehnungsarmen Material umgeben ist.

Als Material für den Ring wird eine Legierung, wie Vacon 70 vorgesehen.

Die Verpressung kann hierbei auch bei niedrigen Temperaturen, insbesondere auch bei Raumtemperatur erfolgen. Der Ring sichert auch bei hohen Behältertemperaturen die Preßstelle, obwohl die Verpressung ggf. bei niedrigeren Temperaturen ausgeführt werden kann. Die Ausgestaltung des Hohlleitermantels 213 hinsichtlich der Preßstelle unterscheidet sich nicht von der vorhergehenden Variante.

Fig. 2C zeigt eine Abwandlung zur Fig. 2B, worin der wesentliche Unterschied darin liegt, daß ein zusätzliches Element 225 aus einem dehnungsarmen Material die Preßstelle nicht umgibt, sondern zwischen Hohlleiterfüllung 209 und Hohlleitermantel 213 angeordnet ist.

Als Material für das zusätzliche Element 225 ist eine Legierung, wie Hastelloy, vorgesehen.

Auch bei dieser Variante kann die Verpressung bei niedrigen Temperaturen, insbesondere Raumtemperatur erfolgen. Die Preßstelle ist durch das zusätzliche Element 225 auch bei hohen Behältertemperaturen gesichert. Der Hohlleitermantel 213 ist in dieser Variante so ausgeformt, daß eine Druckübertragung vom zusätzlichen Element 225 erfolgen kann. Die Druckübertragung erfolgt insbesondere über eine Schweißnaht und über eine Druckschulter 226, welche am Hohlleitermantel ausgebildet ist. Der Hohlleitermantel ist hierbei seinerseits mit dem Montageflansch 223 durch eine Schweißnaht fest verbunden.

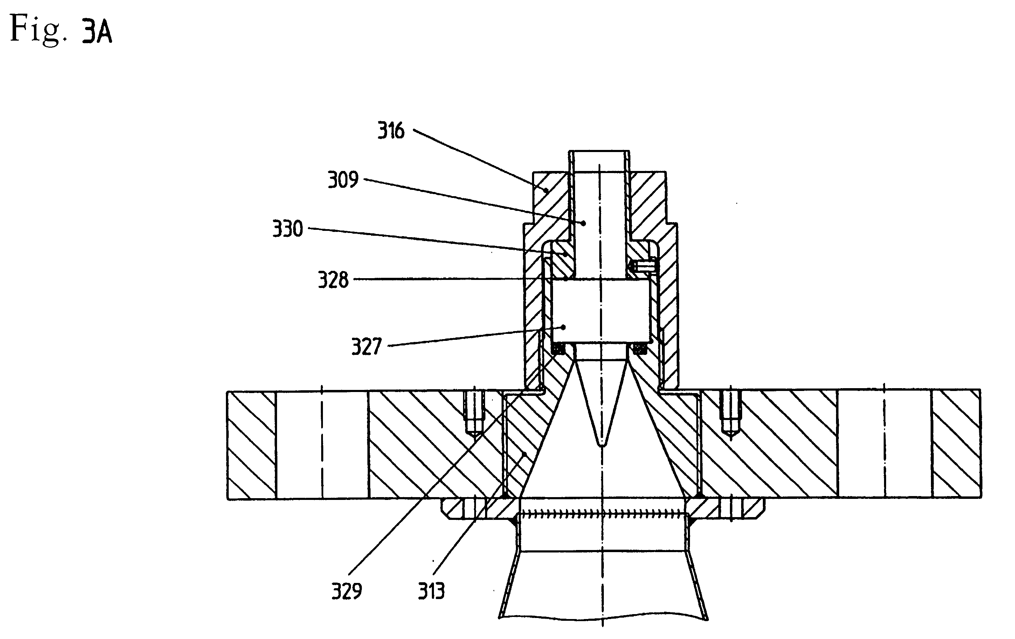

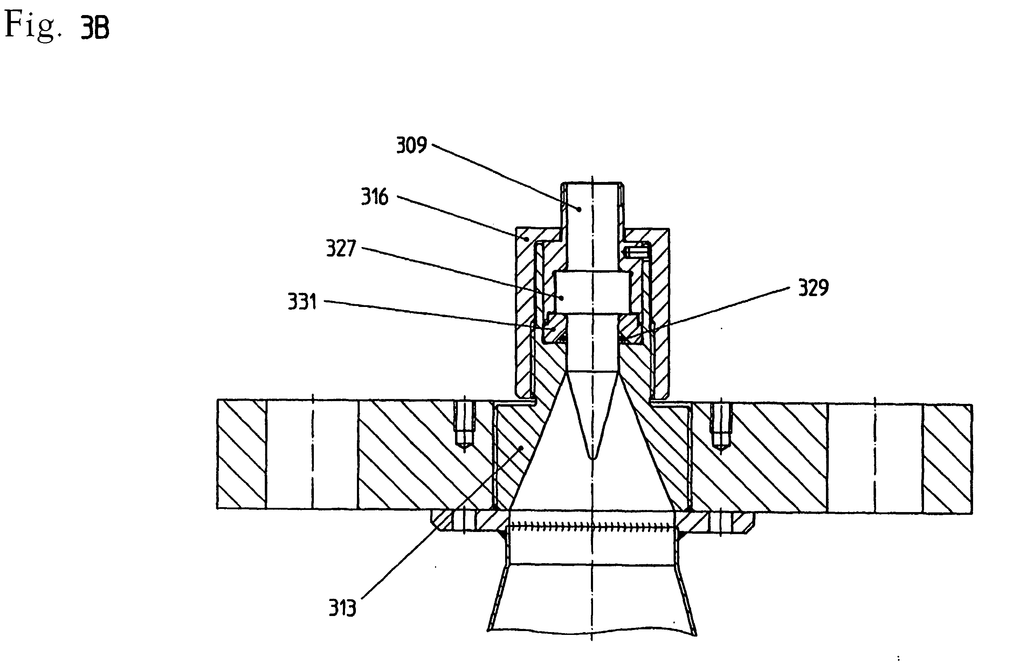

Fig. 3A und Fig. 3B zeigen zwei Varianten einer weiteren alternativen erfindungsgemäßen Ausführungsform des Füllstandsmeßgerätes. Diese Ausführungsform ist wesentlich durch eine Verdickung 327 der Hohlleiterfüllung 309, ausgestaltet als "Lambda/2-Verdickung", charakterisiert. Beide Varianten unterscheiden sich nur durch die Anordnung der Ringdichtungen: während in Fig. 3A die Ringdichtung axial angeordnet ist, ist Fig. 3B durch eine kombinierte axial/radiale Anordnung der Ringdichtung gekennzeichnet.

In Fig. 3A ist, zum Zweck der Druckaufnahme an der Hohlleiterfüllung 309, eine Lambda/2-Verdickung 327 der Hohlleiterfüllung in Kombination mit einer axialen Ringdichtung 329 dargestellt. Die Druckaufnahme an der Hohlleiterfüllung erfolgt dergestalt, daß sich die Hohlleiterfüllung mit der Verdickung 327, in axialer Druckrichtung der Hohlleiterfüllung, gegen eine Druckschulter (328) stützt. Die Druckschulter wird hierbei von einem Druckring (330) gebildet. Der Druckring wird durch eine Druckschraube 316 in seiner Lage fixiert. Die Ringdichtung 329 sorgt für eine Abdichtung gegenüber hohen Behälterdrücken und chemisch agressiven Stoffen. Für die Ringdichtung ist ein Graphitring, eine Graphitdichtung vom Typ "spiraltherm", oder eine Metalldichtung vom Typ "Helicoflex" vorgesehen. Die Druckschraube 316 übt über die Verdickung der Hohlleiterfüllung 327 eine Druckwirkung auf den Dichtring aus. Hierbei wird durch den Druckring 330 ein Verdrehen des Dichtringes bei Fixierung der Druckschraube vermieden. Der Dichtring ist dergestalt auf einem Vorsprung des Hohlleitermantels (313) angeordnet, daß hierbei ein Gegendruck zur Druckwirkung der Druckschraube resultiert.

Fig. 3B zeigt als Variante zur vorherigen Fig. 3A, eine "Lambda/2"-Verdickung der Hohlleiterfüllung 327 in Verbindung mit einer Ringdichtung 329 in axial/radialer Anordnung. Bei dieser Variante wird die Druckwirkung der Druckschraube 316 auf die Ringdichtung durch die Verdickung der Hohlleiterfüllung 327 und einem zusätzlichen Druckring 331 übertragen. Der Druckring ist auf seiner, dem Dichtring zugewandten Seite so abgeschrägt, daß in Verbindung mit dem Gegendruck der Hohlleiterfüllung 309 und des Hohlleitermantels 313 eine axial/radiale Dichtwirkung erzielt wird.

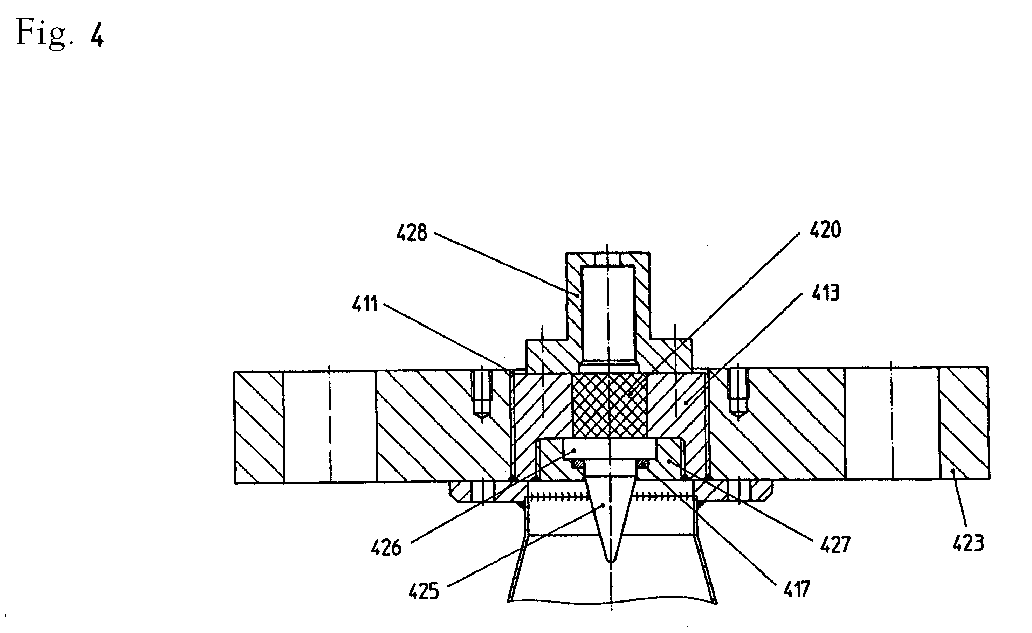

Fig. 4 zeigt eine alternative Variante der Sende-/Empfangseinheit. Hierbei wird ein mikrowellendurchlässiges Material, vorzugsweise Glas, in den Hohlleitermantel 413 z.B. eingelötet, eingeschmolzen oder eingepreßt. Dieses Glasfenster 420 dichtet den Behälterinnenraum nach außen ab und nimmt den Behälterdruck auf. Zur besseren Anpassung der Mikrowellen an die Hornantenne wird der Taper 425, vorzugsweise aus Glas oder Keramik, mittels eines Halteringes 427 am Hohlleitermantel angebracht. Ein Dichtring 417 zwischen dem Haltering 427 und einer Schulter 426 sorgt für die Druckdichtigkeit gegenüber den Behälterdrücken. Hiermit soll verhindert werden, daß Stoffe aus dem Behälterinneren in die Trennstelle zwischen Glasfenster 420 und Taper 425 eindringen. Der Haltering wird mit dem Hohlleitermantel und der Hohlleitermantel mit dem Montageflansch verschweißt. Ein aufgesetzter Hohlleiter 428 führt die Mikrowellenleistung zu. Als Material für das Glasfenster wird vorzugsweise Borsilikatglas verwendet. Die Länge des Glasfensters 420 ist vorzugsweise so zu wählen, daß dieses einen Lambda/2-Transformator bildet.

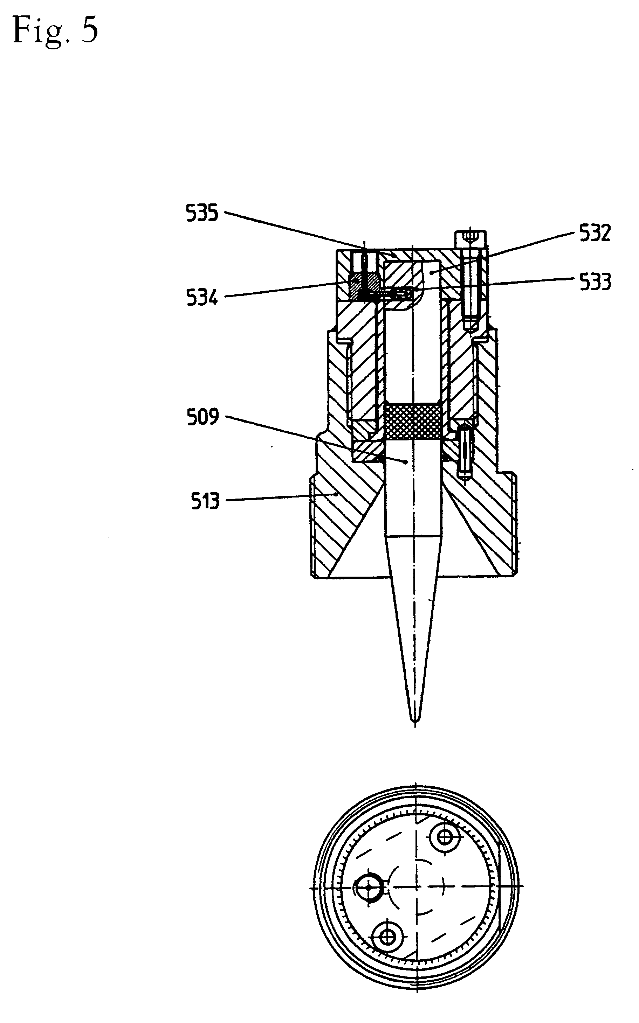

Fig. 5 zeigt die seitliche Übertragung der Mikrowellenimpulse in das Einkoppelstück 532 der Hohlleiterfüllung 509. Die Einkopplung erfolgt über den Erregerstift 533, welcher über einen Koaxialwinkel 534 in seine seitliche Position gebracht wird. Vorteilhaft ist ein Deckel 535 zur Abdeckung der Hohlleiterfüllung vorgesehen.

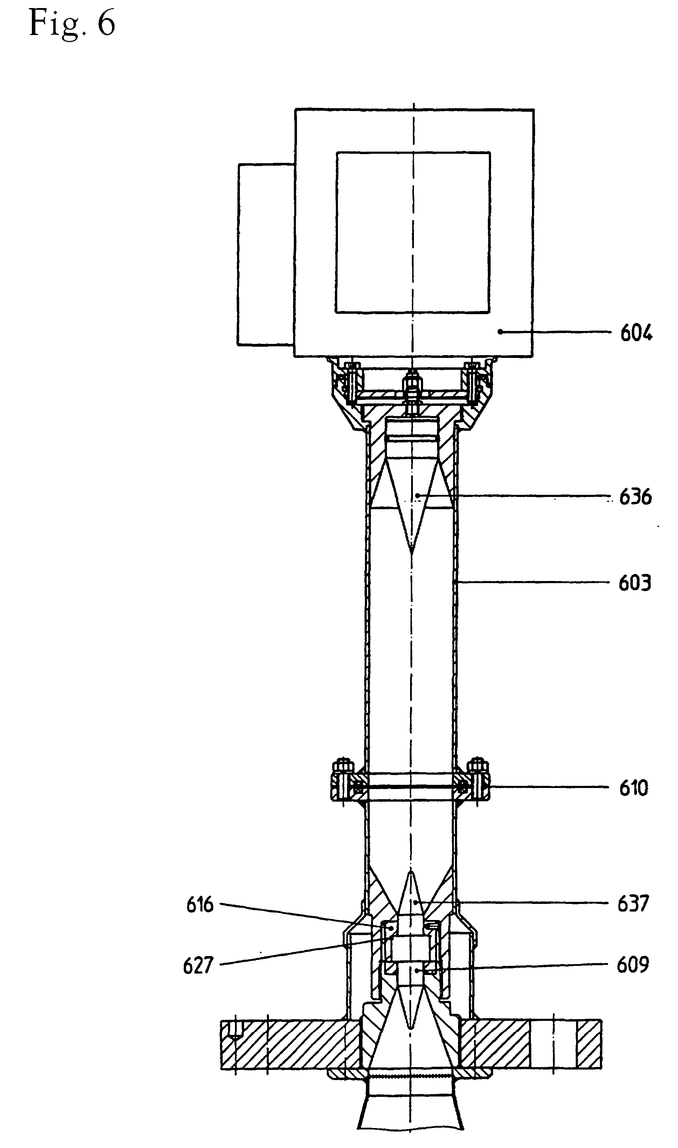

Fig. 6 zeigt eine weitere erfindungsgemäße Ausführungsform des Füllstandsmeßgerätes, bei dem das Distanzrohr 603 als Lufthohlleiter fungiert, wodurch in vorteilhafter Weise die elektrische Leitung zur Übermittlung der Mikrowellenimpulse zwischen dem Elektronikraum 604 und der, in den Behälter abstrahlenden Hohlleiterfüllung 609 ersetzt ist. Die Einkopplung der Mikrowellen in den Lufthohlleiter erfolgt über eine Hohlleitereinkopplung 636; die Einkopplung der im Lufthohlleiter übertragenen Mikrowellen in den Sende-/Empfangsteil des Meßgerätes wird durch einen Hohlleiterübergang 637 bewirkt. Im Distanzrohr 603 kann überdies zur thermischen Abschirmung eine, für Mikrowellen durchlässige, Trennwand 610, vorzugsweise aus Teflon, angeordnet sein. Der Behälterdruck wird am Taper durch eine "Lambda/2"-Verdickung der Hohlleiterfüllung, wie in den Fig. 3A und 3B dargestellt, aufgenommen. Die Ausführungsform ist jedoch natürlich hinsichtlich der Befestigung der Hohlleiterfüllung im Hohlleiter nicht auf eine solche Verdickung der Hohlleiterfüllung beschränkt.

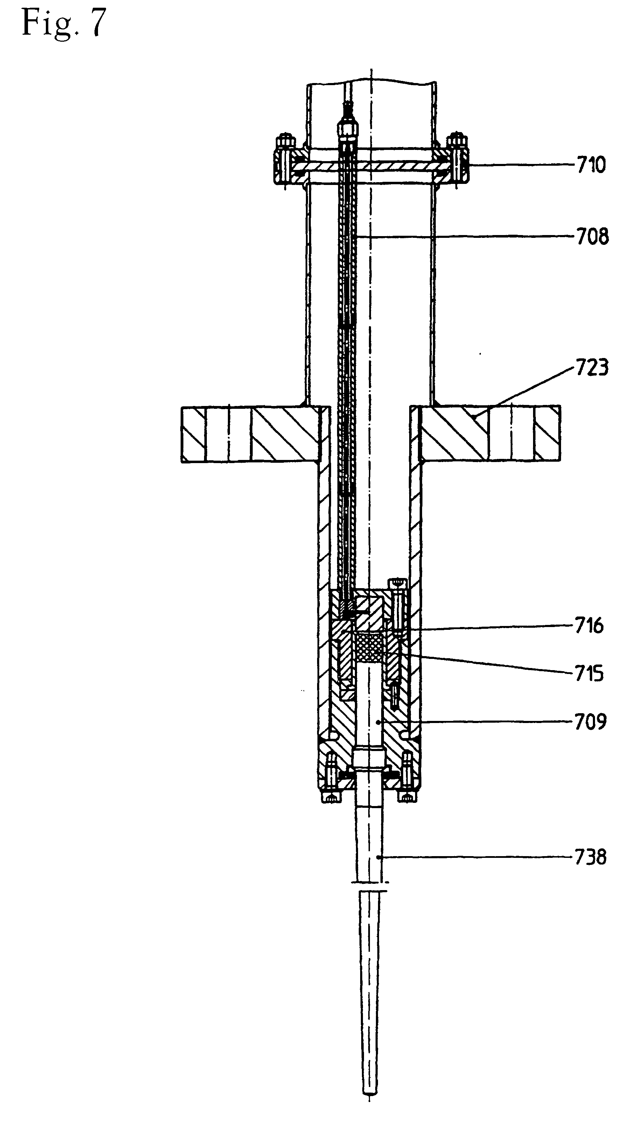

Fig. 7 zeigt eine weitere erfindungsgemäße Ausführungsform des Füllstandsmeßgerätes, bei der die Hornantenne der bisherigen Ausführungsformen durch eine Stielantenne 738 ersetzt wurde. Die Vorrichtungen zur Druckaufnahme des Behälterdruckes und zur Abschirmung der hohen Behältertemperaturen, sowie der chemisch agressiven Stoffe, entsprechen hierbei den zuvor beschriebenen Ausführungsformen. Diese Ausführungsform eignet sich besonders für die Messung durch kleine Behälteröffnungen.

## Patentansprüche

1. Mikrowellen-Füllstandsmessgerät zur Messung eines Füllstandes eines in einem Behälter befindlichen Materials, mit
- einem Gehäuse mit Elektronikeinsatz (104) zur Gerätesteuerung und Messwertbestimmung,
- einer mit dem Elektronikeinsatz (104) in Verbindung stehenden Sende- und Empfangseinheit (101; 738) zum Aussenden und Empfangen von Mikrowellensignalen,
- einer Einbaueinheit (102; 723), mit der das Füllstandsmessgerät in einer Öffnung in dem Behälter befestigbar ist,
- einem Distanzrohr (103; 603; 703), das zwischen dem Elektronikeinsatz (104) und der Sende- und Empfangseinheit (101; 738) zu deren thermischen und räumlichen Trennung angeordnet ist, und
- wenigstens einer das Distanzrohr (103; 603; 703) quer unterteilenden Trennwand (110; 610; 710), die aus einem Material mit geringer Wärmeleitfähigkeit besteht und die das Distanzrohr (103; 603; 703) in zwei zwischen dem Elektronikeinsatz (104) und der Einbaueinheit (102; 723) aufeinanderfolgende, voneinander thermisch isolierte Abschnitte unterteilt.

2. Füllstandsmessgerät nach Anspruch 1,
**dadurch gekennzeichnet, dass** sich an einem Ende des Distanzrohrs (603) eine Hohlleitereinkopplung (636) und am anderen Ende des Distanzrohrs (603), getrennt durch eine für Mikrowellen durchlässige Trennwand (610), ein Hohlleiterübergang (637) befinden, zwischen denen in Kombination mit dem als Lufthohlleiter fungierenden Distanzrohr (603) die Mikrowellensignale ohne Kabel- und Leitungsverbindungen übertragen werden.

3. Füllstandsmessgerät nach Anspruch 1,
**dadurch gekennzeichnet, dass** der Elektronikeinsatz (104) und die Sende- und Empfangseinheit (101) mittels einer in dem Distanzrohr (103; 710) verlaufenden, sich durch die Trennwand (110; 710) erstreckenden elektrischen Leitung (107, 108) zur Übertragung der Mikrowellensignale verbunden sind.

4. Füllstandsmessgerät nach Anspruch 3,
**dadurch gekennzeichnet, dass** die elektrische Leitung zwischen dem Elektronikeinsatz (104) und der Sende- und Empfangseinheit (101) sich aus einem Kabel (107) und einer hiermit verbundenen Luftkoaxialleitung (108) zusammensetzt, wobei sich die Verbindungsstelle zwischen dem Kabel (107) und der Luftkoaxialleitung (108) in der Nähe der Trennwand (110) befindet.

5. Füllstandsmessgerät nach Anspruch 4,
**dadurch gekennzeichnet, dass** sich die Verbindungsstelle zwischen dem Kabel (107) und der Luftkoaxialleitung (108) in dem von der Sende- und Empfangseinheit (101) durch die Trennwand (110) abgetrennten Abschnitt befindet.

6. Füllstandsmessgerät nach einem der voranstehenden Ansprüche,
**dadurch gekennzeichnet, dass** die Sende- und Empfangseinheit (101; ) einen Hohlleiter (111), eine Hohlleiterfüllung (109) und eine Antenne (112) umfasst.

7. Füllstandsmessgerät nach Anspruch 6,
**dadurch gekennzeichnet, dass** der Hohlleiter (111) druckstabil mit der Einbaueinheit (102; 723) verbunden ist, und die Hohlleiterfüllung (109) in den Hohlleiter (111) druckstabil eingeschweißt, eingelötet oder eingeschmolzen ist.

8. Füllstandsmessgerät nach Anspruch 7,
**dadurch gekennzeichnet, dass** der Hohlleiter (111) eine Hülse (114) enthält, in der die Hohlleiterfüllung (109) eingeschweißt, eingelötet oder eingeschmolzen ist, wobei ein Teil der Hülse (114) aus einem dem Wärmeausdehnungskoeffizienten der Hohlleiterfüllung (109) angepassten Material besteht und die Hülse (114) druckstabil mit dem Hohlleiter (111) verbunden ist.

9. Füllstandsmessgerät nach einem der voranstehenden Ansprüche,
**dadurch gekennzeichnet, dass** der Hohlleiter (111) einen Hohlleitermantel (113), eine Hülse (114), eine Druckschraube (116) und einen Druckring (118) umfasst, wobei die Hülse (114) mit der Hohlleiterfüllung (109) druckstabil verschweißt, verlötet oder verschmolzen ist und die Druckschraube (116) über den Druckring (118) die Hülse (114) und die damit verbundene Hohlleiterfüllung (109) druckstabil mit dem Hohlleitermantel (113) verbindet.

10. Füllstandsmessgerät nach einem der Ansprüche 7-9,
**dadurch gekennzeichnet, dass** der Hohlleiter (111) durch Verschweißen druckstabil mit der Einbaueinheit (102) verbunden ist.

11. Füllstandsmessgerät nach einem der voranstehenden Ansprüche,
**dadurch gekennzeichnet, dass** die Hohlleiterfüllung (109) an einem Ende mit einem Taper (125) ausgebildet ist.

12. Füllstandsmessgerät nach Anspruch 11,
**dadurch gekennzeichnet, dass** der Taper in einem Hohlleitermantel (113) des Hohlleiters (111) druckstabil verpresst ist.

13. Füllstandsmessgerät nach Anspruch 12,
**dadurch gekennzeichnet, dass** die Verpressung thermisch oder nichtthermisch, insbesondere bei Raumtemperatur durchgeführt ist

14. Füllstandsmessgerät nach Ansprüchen 12 oder 13,
**dadurch gekennzeichnet, dass** die Pressstelle wenigstens von einem zusätzlichen Element umgeben ist, dessen Material einen geringeren Wärmeausdehnungskoeffizienten hat als das Material des Hohlleiters (111), wodurch die Verpressung gesichert ist.

15. Füllstandsmessgerät nach einem der voranstehenden Ansprüche,
**dadurch gekennzeichnet, dass** die Trennwand (110) aus Teflon besteht.

16. Füllstandsmessgerät nach einem der voranstehenden Ansprüche,
**dadurch gekennzeichnet, dass** das Distanzrohr (103; 603; 703) aus metallischem Material besteht.

## Claims

1. A microwave filling level measuring device for measuring a filling level of a material contained in a vessel, comprising
- a housing with an electronic insert (104) for device control and measuring value determination,
- a transmitting/receiving unit (101; 738) connected to the electronic insert (104) for transmitting and receiving microwave signals,
- a mounting unit (102; 723) enabling attachment of the filling level measuring device in an opening of the vessel,
- a spacer tube (103; 603; 703) interposed between said electronic insert (104) and said transmitting/receiving unit (101; 738) for thermal and spatial separation thereof, and
- at least one dividing wall (110; 610; 710) subdividing said spacer tube in a transverse direction, said dividing wall being of a material having low thermal conductivity and subdividing said spacer tube (103; 603; 703) into two segments arranged in sequence between said electronic insert (104) and said mounting unit (102; 723) and thermally insulating one against the other.

2. The filling level measuring device according to claim 1,
**characterized in that** at one end of said spacer tube (603) there is a hollow conductor coupling (636) and at the other end of said spacer tube (603), separated by a dividing wall (610) permaeble to microwaves, there is a hollow conductor junction (637) between which, in combination with said spacer tube (603) functioning as a hollow air conductor, the microwave signals are transmitted without cable or conductor connections.

3. The filling level measuring device according to claim 1,
**characterized in that** said electronic insert (104) and said transmitting/receiving unit (101) are connected by means of an electrical conductor (107, 108) extending within said spacer tube (103; 710) and through said dividing wall (110; 710) for transmitting said microwave signals.

4. The filling level measuring device according to claim 3,
**characterized in that** said electrical conductor between said electronic insert (104) and said transmitting/receiving unit (101) consists of a cable (107) and an air-insulated coaxial conductor (108) connected therewith, wherein the point of connection between said cable (107) and said air-insulated coaxial conductor (108) is in the vicinity of said dividing wall (110).

5. The filling level measuring device according to claim 4,
**characterized in that** the connecting point between said cable (107) and said air-insulated coaxial conductor (108) is within the segment separated from said transmitting/receiving unit (101) by said dividing wall (110).

6. The filling level measuring device according to any one of the preceding claims,
**characterized in that** said transmitting/receiving unit (101; ) comprises a hollow conductor (111), a hollow conductor filling (109) and an antenna (112).

7. The filling level measuring device according to claim 6,
**characterized in that** said hollow conductor (111) is connected to said mounting unit (102; 723) in a pressure-resistant manner, and said hollow conductor filling (109) is inserted by welding, soldering or melting in said hollow conductor (111) in a pressure-resistant manner.

8. The filling level measuring device according to claim 7,
**characterized in that** said hollow conductor (111) comprises a sleeve (114) within which said hollow conductor filling (109) is inserted by welding, soldering or melting, wherein a part of said sleeve (114) is of a material having a coefficient of thermal expansion adapted to that of said hollow conductor filling (109) and said sleeve (114) is connected to said hollow conductor (111) in a pressure-resistant manner.

9. The filling level measuring device according to any one of the preceding claims,
**characterized in that** said hollow conductor (111) comprises a hollow conductor sheath (113), a sleeve (114), a pressure screw (116) and a pressure ring (118), wherein said sleeve (114) is connected to said hollow conductor filling (109) by welding, soldering or melting in a pressure-resistant manner and said pressure screw (116), via said pressure ring (118), connects said sleeve (114), and said hollow conductor filling (109) connected therewith, to said hollow conductor sheath (113) in a pressure-resistant manner.

10. The filling level measuring device according to any one of claims 7 to 9,
**characterized in that** said hollow conductor (111) is connected to said mounting unit (102) by welding in a pressure-resistant manner.

11. The filling level measuring device according to any one of the preceding claims,
**characterized in that** said hollow conductor filling (109) has a taper (125) at one end.

12. The filling level measuring device according to claim 11,
**characterized in that** said taper is pressure-inserted in a hollow conductor sheath (113) of said hollow conductor (111) in a pressure-resistant manner.

13. The filling level measuring device according to claim 12,
**characterized in that** said pressure-insertion is carried out thermally or non-thermally, in particular at room temperature.

14. The filling level measuring device according to claim 12 or claim 13,
**characterized in that** the pressure location is surrounded by at least one additional member of a material having a coefficient of thermal expansion less than that of the material of said hollow conductor (111), making said pressure-insertion secure.

15. The filling level measuring device according to any one of the preceding claims,
**characterized in that** said dividing wall (110) is of Teflon.

16. The filling level measuring device according to any one of the preceding claims,
**characterized in that** said spacer tube (103; 603; 703) is of a metallic material.

## Revendications

1. Appareil de mesure du niveau de remplissage à micro-ondes pour la mesure d'un niveau de remplissage d'un matériau se trouvant dans un récipient, comprenant
- un boîtier avec une insertion électronique (104) pour la commande d'appareils et la détermination de la valeur mesurée,
- une unité d'émission et de réception (101 ; 738) en liaison avec l'insert électronique (104) pour l'émission et la réception de signaux hyperfréquence,
- une unité de montage (102 ; 723) avec laquelle l'appareil de mesure du niveau de remplissage peut être fixé dans une ouverture dans le récipient,
- un tuyau d'espacement (103 ; 603 ; 703), qui est disposé entre l'insert électronique (104) et l'unité d'émission et de réception (101 ; 738) pour sa séparation thermique et dans l'espace,
- au moins une cloison de séparation (110 ; 610 ; 710) subdivisant transversalement le tuyau d'espacement (103 ; 603 ; 703), qui est à base d'un matériau présentant une faible conductibilité thermique et qui subdivise le tuyau d'espacement (103 ; 603 ; 703) en deux parties isolées thermiquement l'une de l'autre et se suivant entre l'insert électronique (104) et l'unité de montage (102 ; 723).

2. Appareil de mesure du niveau de remplissage selon la revendication 1, **caractérisé en ce qu'**une injection de guide d'ondes (636) et une transition de guide d'ondes (637) se trouvent respectivement sur une extrémité du tuyau d'espacement (603) et sur l'autre extrémité du tuyau d'espacement (603), séparées par une cloison de séparation (610) perméable aux micro-ondes, entre lesquelles les signaux hyperfréquence sont transmis sans liaisons par câble et ligne en combinaison avec le tuyau d'espacement (603) faisant office de guide d'ondes d'air.

3. Appareil de mesure du niveau de remplissage selon la revendication 1, **caractérisé en ce que** l'insert électronique (104) et l'unité d'émission et de réception (101) sont reliés au moyen d'une ligne (107 ; 108) électrique, agencée dans le tuyau d'espacement (103 ; 710) et s'étendant à travers la cloison de séparation (110 ; 710) pour la transmission des signaux hyperfréquence.

4. Appareil de mesure du niveau de remplissage selon la revendication 3, **caractérisé en ce que** la ligne électrique entre l'insert électronique (104) et l'unité d'émission et de réception (101) se compose d'un câble (107) et d'une conduite coaxiale d'air (108) reliée au câble, le point de liaison entre le câble (107) et la conduite coaxiale d'air (108) se trouvant à proximité de la cloison de séparation (110).

5. Appareil de mesure du niveau de remplissage selon la revendication 4, **caractérisé en ce que** le point de liaison entre le câble (107) et la conduite coaxiale d'air (108) se trouvent dans la partie séparée de l'unité d'émission et de réception (101) par la cloison de séparation (110).

6. Appareil de mesure du niveau de remplissage selon l'une quelconque des revendications précédentes, **caractérisé en ce que** l'unité d'émission et de réception (101 ;) comprend un guide d'ondes (111), un charge du guide d'ondes (109) et une antenne (112).

7. Appareil de mesure du niveau de remplissage selon la revendication 6, **caractérisé en ce que** le guide d'ondes (111) est relié de façon stable à la pression à l'unité de montage (102 ; 723), et le charge du guide d'ondes (109) est introduit par soudage, brasage ou fusion de façon stable en pression dans le guide d'ondes (111).

8. Appareil de mesure du niveau de remplissage selon la revendication 7, **caractérisé en ce que** le guide d'ondes (111) contient une douille (114), dans laquelle la charge du guide d'ondes (109) est introduite par soudage, brasage ou fusion, une partie de la douille (114) étant à base d'un matériau adapté au coefficient de dilatation thermique de la charge du guide d'ondes (109) et la douille (114) étant reliée de façon stable en pression au guide d'ondes (111).

9. Appareil de mesure du niveau de remplissage selon l'une quelconque des revendications précédentes, **caractérisé en ce que** le guide d'ondes (111) comprend une enveloppe de guide d'ondes (113), une douille (114), une vis de pression (116) et une bague de pression (118), la douille (114) étant soudée, brasée ou fondue de façon stable en pression avec la charge de guide d'ondes (109) et la vis de pression (116) reliant par la bague de pression (118) la douille (114) et la charge de guide d'ondes (109) reliée à celle-ci de façon stable en pression à l'enveloppe de guide d'ondes (113).

10. Appareil de mesure du niveau de remplissage selon l'une quelconque des revendications 7 à 9, **caractérisé en ce que** le guide d'ondes (111) est relié par soudage de façon stable en pression à l'unité de montage (102).

11. Appareil de mesure du niveau de remplissage selon l'une quelconque des revendications précédentes, **caractérisé en ce que** la charge de guide d'ondes (109) est conçue sur une extrémité avec un raccord progressif (125).

12. Appareil de mesure du niveau de remplissage selon la revendication 11, **caractérisé en ce que** le raccord progressif est comprimé de façon stable en pression dans une enveloppe de guide d'ondes (113) du guide d'ondes (111).

13. Appareil de mesure du niveau de remplissage selon la revendication 12, **caractérisé en ce que** la compression est effectuée thermiquement ou non thermiquement, en particulier à la température ambiante.

14. Appareil de mesure du niveau de remplissage selon la revendication 12 ou 13, **caractérisé en ce que** le point de compression est entouré au moins d'un élément supplémentaire, dont le matériau a un coefficient de dilatation thermique plus faible que le matériau du guide d'ondes (111), de sorte que la compression est garantie.

15. Appareil de mesure du niveau de remplissage selon l'une quelconque des revendications précédentes, **caractérisé en ce que** la cloison de séparation (110) est à base de téflon.

16. Appareil de mesure du niveau de remplissage selon l'une quelconque des revendications précédentes, **caractérisé en ce que** le tuyau d'espacement (103 ; 603 ; 703) est à base de matériau métallique.
